# EUROPÄISCHE PATENTSCHRIFT

(11) **EP 4 377 621 B1**
(45) Veröffentlichungstag und Bekanntmachung des Hinweises auf die Patenterteilung: **13.08.2025**
(21) Anmeldenummer: 22751438.7
(22) Anmeldetag: 04.07.2022
(51) Int. Cl.: F25D 23/06, F25D 3/06, B32B 9/00, B65D 81/38, B65D 90/06, B32B 5/18, B32B 25/04, B32B 29/00

(54) **VERSANDBEHÄLTER ZUM VERSENDEN VON TEMPERATUREMPFINDLICHEM TRANSPORTGUT**
SHIPPING CONTAINER FOR SHIPMENT OF TEMPERATURE-SENSITIVE GOODS
RÉCIPIENT DE TRANSPORT DES MARCHANDISES SENSIBLES À LA TEMPÉRATURE

(30) Priorität: 30.07.2021 AT 1312021
(43) Veröffentlichungstag der Anmeldung: 05.06.2024
(73) Patentinhaber: REP IP AG, 6300 Zug (CH)
(72) Erfinder: ROS, Nico, 4125 Riehen (CH); RETZKO, Stefan, 8037 Zürich (CH)
(74) Vertreter: SONN Patentanwälte GmbH & Co KG
(86) Internationale Anmeldenummer: PCT/IB2022/056174
(87) Internationale Veröffentlichungsnummer: WO 2023/007278

(56) Entgegenhaltungen:
- AT-B1- 522 314
- JP-A- 2012 184 909
- US-A1- 2014 248 515

## Beschreibung

Die Erfindung betrifft einen Versandbehälter zum Versenden von temperaturempfindlichem Transportgut umfassend Behälterwände, welche einen für die Aufnahme des Transportguts vorgesehenen Innenraum allseitig umgeben und abschließen, wobei die Behälterwände eine Wärmedämmung aufweisen.

Herkömmliche Versandbehälter für den temperaturkontrollierten Versand von Waren umfassen eine äußere Hülle, welche aus Karton oder Kunststoff besteht, für die nötige Stabilität beim Versenden sorgt und Platz für Haltegriffe und Beschriftungen/Etiketten bietet. Innerhalb der äußeren Hülle ist eine thermische Isolationsschicht angeordnet, welche zum Beispiel aus Styropor (EPS) oder einem anderen Dämmmaterial (PUR, PIR, XPS) besteht. In dem von den Behälterwänden umschlossenen Innenraum befindet sich entweder direkt das Transportgut zusammen mit einem Kühlmittel (z.B. Lebensmittel gekühlt mit Eis) oder es folgt eine Kühlmittelschicht (z.B. Kühlakkus mit einem Phasenwechselmaterial), welche eine Innenhülle umgibt, in der das Transportgut eingelegt ist. Herkömmliche Versandbehälter haben das Problem, dass sich bei ungleichmäßigem Wärmeeintrag lokal unterschiedliche Temperaturen im Transportgut einstellen können. In Bereichen mit hohem Wärmeeintrag kann das Transportgut daher über die zulässige Maximaltemperatur (z.B. 8°C) erwärmt werden, was per Definition die Laufzeit der gesamten Versandschachtel limitiert, obwohl in anderen Bereichen noch deutlich niedrigere Temperaturen herrschen. Das Potential des Kühlmittels wird in diesem Fall nicht effizient ausgenutzt

Ein Versandbehälter nach dem Oberbegriff des Anspruchs 1 ist aus JP 2012 184909 A bekannt.

Dieser Effekt ist besonders ausgeprägt, wenn das Transportgut den Innenraum der Versandschachtel vollständig ausfüllt und dadurch eine interne Luftzirkulation verhindert wird, welche die Wärmeverteilung verbessern würde. Weiterhin ist der Effekt verstärkt, wenn sich das Kühlmittel innerhalb des Transportguts befindet, da dann ein Großteil der Kälteenergie des innenliegenden Kühlmittels nicht genutzt werden kann.

Eine gängige Ausführung zur Verbesserung der internen Wärmeverteilung ist das Einbringen von Rillen in den Innenwänden. Dadurch bleibt die Luftzirkulation erhalten, auch wenn das Transportgut an den Innenwänden anliegt. Ein Nachteil dieser Ausführung ist allerdings der Platzbedarf. Um eine sinnvolle Luftzirkulation zu erreichen, müssen die Rillen mindestens eine Tiefe von 3-8mm aufweisen. Dieser Platz geht entweder dem Innenraum oder dem Wandaufbau verloren. Außerdem stellt sich durch Luftdichteunterschiede in einem passiv gekühlten Behälter üblicherweise ein Temperaturgradient im Innenraum ein. Warme Luft steigt nach oben und sorgt dort für eine lokale Erwärmung des Transportguts. Dadurch wird der positive Effekt der Luftzirkulation auf die Wärmeverteilung gemindert.

Eine weitere mögliche Vorgehensweise zur Verbesserung der internen Wärmeverteilung ist die Verwendung einer Innenhülle aus Aluminium oder mit Aluminiumelementen. Dies führt allerdings zu einer deutlichen Gewichtserhöhung und wirkt sich negativ auf die Herstellungskosten und die Rezyklierbarkeit der Versandschachtel aus.

Die vorliegenden Erfindung zielt daher darauf ab, die Wärmeverteilung innerhalb von Versandbehältern zu verbessern.

Dies betrifft nicht nur die Wärmeverteilung entlang der Innenhülle des Versandbehälters, sondern auch innerhalb des Transportguts.

Die verbesserte Wärmeverteilung soll zu einer Angleichung der Temperatur des Transportguts und eines allfälligen Kühlmittels in dem gesamten Versandbehälter und somit zu einer höheren Laufzeit führen.

Der zur Verfügung stehende Raum innerhalb des Versandbehälters soll möglichst gut ausgenutzt werden. Die Dicke des Wandaufbaus soll minimiert und der Innenraum soll vollständig beladen werden dürfen. Die Wärmeverteilung soll ohne Luftzirkulation erfolgen.

Schließlich soll der Versandbehälter günstig und einfach in der Herstellung sein, ein geringes Gewicht aufweisen und rezyklierbar sein. Die Handhabung soll möglichst einfach und flexibel sein.

Zur Lösung dieser Aufgabe sieht die Erfindung bei einem Versandbehälter der eingangs genannten Art im Wesentlichen vor, dass im Innenraum und/oder den Innenraum begrenzend Wärmeleitplatten angeordnet sind, die mehrschichtig aufgebaut sind und wenigstens eine Schicht aus expandiertem Graphit aufweisen.

Die erfindungsgemäß vorgesehenen mehrschichtigen Wärmeleitplatten sind sehr einfach und flexibel einsetzbar. Zum einen kann der Innenraum mit den Wärmeleitplatten ausgekleidet werden, so dass eine hochwärmeleitende Innenhülle innerhalb der Wärmedämmung entsteht. Zum anderen können die Wärmeleitplatten als Zwischenlagen innerhalb des Transportguts eingelegt werden.

Expandierter Graphit zeichnet sich durch ein geringes Gewicht aus. Expandierter Graphit hat eine hohe Wärmeleitfähigkeit und eignet sich somit optimal, ungleichmäßige Wärmeeinträge, welche zum Beispiel durch Wärmebrücken in der Wärmedämmung des Behälters auftreten, auszugleichen. Dies hat einen positiven Effekt auf die Laufzeit des Versandbehälters.

Expandierter Graphit (auch Blähgraphit genannt) wird hergestellt, indem zwischen den Gitterschichten des Graphits Fremdbestandteile (Intercalate) eingelagert werden. Solche expandierbaren Graphit-Intercalationsverbindungen werden üblicherweise dadurch hergestellt, dass man Graphitteilchen in einer Lösung dispergiert, die ein Oxidationsmittel und die einzulagernde Gastverbindung enthält. Üblicherweise angewandte Oxidationsmittel sind Salpetersäure, Kaliumchlorat, Chromsäure, Kaliumpermanganat und dergleichen. Als einzulagernde Verbindung wird beispielsweise konzentrierte Schwefelsäure verwendet. Die expandierbaren Graphit-Intercalationsverbindungen unterliegen beim Erhitzen auf eine Temperatur oberhalb der sogenannten Onset-Temperatur einer starken Volumenzunahme mit Expansionsfaktoren von mehr als 200, die dadurch verursacht wird, dass die in die Schichtstruktur des Graphits eingelagerten Intercalationsverbindungen durch das schnelle Erhitzen auf diese Temperatur unter Bildung gasförmiger Stoffe zersetzt werden, wodurch die Graphitschichten ziehharmonikaartig auseinandergetrieben, d.h. die Graphitpartikel senkrecht zu der Schichtebene expandiert oder aufgebläht werden.

Wird der vollständig expandierte Graphit unter gerichteter Einwirkung eines Druckes kompaktiert, so ordnen sich die Schichtebenen des Graphits bevorzugt senkrecht zur Einwirkungsrichtung des Druckes an, wobei sich die einzelnen Aggregate untereinander verhaken. Dadurch lässt sich ohne Binderzusatz eine selbsttragende Schicht aus expandiertem Graphit herstellen.

Die erfindungsgemäß verwendete Wärmeleitplatte zeichnet sich bei einer bevorzugten Ausbildung daher dadurch aus, dass die Schichtebenen des expandierten Graphits im Wesentlichen parallel zu einander und parallel zur Plattenebene verlaufen. Hierdurch ergibt sich in vorteilhafter Weise eine anisotrope Wärmeleitfähigkeit der Wärmeleitplatte. Dies bedeutet, dass die Wärmeleitfähigkeit des expandierten Graphits entlang seiner Außenfläche hoch ist, beim Durchgang durch das Material jedoch gering. Diese doppelte Funktionalität führt einerseits zu der gewünschten Wärmeverteilung in der Plattenebene und andererseits zu eine Reduktion des Wärmeeintrags in das Transportgut quer zur Plattenebene. Insbesondere weist die Schicht aus expandiertem Graphit in der Plattenebene bevorzugt eine Wärmeleitfähigkeit von 190-760 W/mK oder 190-380 W/mK auf.

Um die ggf. instabile Schicht aus expandiertem Graphit zu stützen und deren Handhabbarkeit zu verbessern, ist vorgesehen, dass die Wärmeleitplatten wenigstens eine Trägerschicht aufweisen, auf welcher die Schicht aus expandiertem Graphit angeordnet ist und mit welcher sie ggf. verbunden ist.

Insbesondere kann vorgesehen sein, dass die Schicht aus expandiertem Graphit zwischen zwei Trägerschichten angeordnet ist. Die wenigstens eine Trägerschicht besteht aus Karton oder Kunststoff.

Bevorzugt weist die wenigstens eine Trägerschicht eine Dicke von 0,3-1mm auf. Die wenigstens eine Schicht aus expandiertem Graphit weist bevorzugt eine Dicke von 0,4-4mm, vorzugsweise 0,4-1mm auf.

Auf Grund der Anwesenheit der Trägerschicht(en) weist die Wärmeleitplatte eine gegenüber dem reinen expandierten Graphit eine reduzierte mittlere Wärmeleitfähigkeit in der Plattenebene auf, welche vorteilhaft in einem Bereich von 60-180W/mK liegen kann.

Die Wärmeleitplatten umgeben den Innenraum allseitig und lückenlos. Die Wärmeleitplatten bilden somit beispielsweise eine innere Hülle, in der sich das Transportgut befindet. Im Fall eines quaderförmigen Versandbehälters ist jeder der sechs Wände bevorzugt eine Wärmeleitplatte zugeordnet, sodass die genannte innere Hülle aus sechs Wärmeleitplatten aufgebaut wird. Die Wärmeleitplatten, insbesondere deren Randbereiche, berühren einander bevorzugt direkt, sodass es um den gesamten Innenraum herum zu einem Wärmeausgleich kommt, wobei Wärme über die innere Hülle beispielsweise von einer Seite des Innenraums zu einer gegenüberliegenden Seite geleitet werden kann.

Die Wärmeleitplatten können dabei mit den Behälterwänden fest verbunden sein. Alternativ können die Wärmeleitplatten an die Behälterwände lediglich angelegt werden, wobei aneinandergrenzende Wärmeleitplatten konstruktiv (z.B. mit einer Verzahnung) miteinander verbunden werden können, um ein Kippen in den Innenraum zu verhindern. Zuletzt wird die Deckplatte eingelegt, die einer entfernbaren Behälterwand, d.h. einem Deckel, zugeordnet ist. Die Deckplatte kann alterativ am Deckel z.B. durch Klebung befestigt werden.

Alternativ zur Anordnung der Wärmeleitplatten an den Behälterwänden oder zusätzlich dazu können Wärmeleitplatten vorgesehen sein, welche den Innenraum des Versandbehälters durchqueren. Die Wärmeleitplatten können hierbei Raumteiler ausbilden, zwischen denen das Transportgut angeordnet ist. Bei einer bevorzugten Ausführungsform sind die Wärmeleitplatten rasterförmig bzw. gitterförmig angeordnet und teilen den Innenraum in eine Vielzahl von quaderförmigen Aufnahmekammern auf, in denen jeweils wenigstens eine temperaturempfindliche Ware angeordnet werden kann, wie z.B. eine Medikamentenschachtel oder dgl.

Der Einfluss der Wärmeleitplatten auf die Laufzeit des Versandbehälters ist besonders hoch, wenn der Versandbehälter ein Kühlmittel oder ein Kühlmittelelement aufweist, zu welchem wenigstens eine der Wärmeleitplatten benachbart, insbesondere dieses berührend, angeordnet ist. Unter einem Kühlmittelelement ist hierbei ein Element, wie z.B. ein Behälter, zu verstehen, in dem ein flüssiges oder verflüssigbares Kühlmittel enthalten ist. Als Kühlmittel kann insbesondere ein Phasenwechselmaterial verwendet werden. Kühlelemente sind beispielsweise als Kühlakkus ausgebildet.

Bevorzugt ist das Kühlmittel innerhalb des Transportguts verteilt angeordnet. Dies kann zum Beispiel bei Medikamentenschachteln mit innenliegenden Kühlakkus der Fall sein. Um das Kühlmittel optimal zu nutzen, müssen die Wärmeleitplatten sowohl um die Medikamentenschachteln herum als auch als Zwischenlagen eingelegt werden. Die Laufzeit des Versandbehälters wird in diesem Fall durch den Einsatz der vorliegenden Erfindung mehr als verdoppelt werden. Dies entspricht einer Erhöhung von >100%.

Ein weiteres Beispiel, bei dem der Einfluss von Wärmeleitplatten sehr hoch ist, ist eine unvollständige Abdeckung mit Kühlmittelelementen. Ein häufiges Problem beim Einsatz von Kühlakkus ist, dass aus konstruktiven Gründen keine geschlossene Umhüllung des Transportguts erreicht werden kann. Dies führt zu einem lokalen Wärmeeinbruch und zu einer vorzeitig beendeten Laufzeit. Mit dem Einsatz von Wärmeleitplatten gemäß der Erfindung wird die Wärme gleichmäßig über die Kühlakkus verteilt und absorbiert. Dies führt zu einer signifikanten Erhöhung der Laufzeit.

Eine weitere bevorzugte Möglichkeit der Kombination der Wärmeleitplatten mit Kühlelementen kann dadurch erreicht werden, dass eine äußere Lage aus Wärmeleitplatten vorgesehen ist, welche den Innenraum allseitig umgeben, und dass eine innere Lage aus Wärmeleitplatten vorgesehen ist, welche den Innenraum allseitig umgeben, wobei zwischen der äußeren und der inneren Lage passive Kühlelemente angeordnet sind.

Das Kühlmittel kann auch als Teil der Behälterwandung vorgesehen sein. Eine bevorzugte Ausbildung sieht in diesem Zusammenhang vor, dass die Behälterwände mehrschichtig ausgebildet sind und wenigstens eine Schicht aus einem Kühlmittel, wie z.B. einem Phasenwechselmaterial, als Wärmedämmung aufweisen.

Die in den Behälterwänden angeordnete Wärmedämmung kann alternativ oder zusätzlich auch als herkömmliche Dämmschicht ausgebildet sein, wobei die Behälterwände mehrschichtig ausgebildet sind und wenigstens eine Wärmedämmschicht als Wärmedämmung aufweisen. Die Wärmedämmschicht kann beispielsweise aus Styropor (EPS) oder einem anderen Dämmmaterial, wie z.B. Polyurethan (PUR), Polyisocyanurat (PIR) oder extrudiertem Polystyrol (XPS) bestehen. Die Wärmedämmschicht weist bevorzugt eine in einer Richtung von außen nach innen gemessen Wärmeleitfähigkeit von < 0,05 W/mK auf.

Der erfindungsgenmäße Versandbehälter ist bevorzugt schachtelförmig ausgebildet. Ein schachtelförmiger Versandbehälter weist bevorzugt einen quaderförmigen, einseitig offenen Grundkörper und einen Deckel auf, wobei der Deckel einstückig mit dem Grundkörper ausgebildet ist, z.B. durch eine Knickkante verbunden, oder als gesonderter Deckel ausgebildet ist, der auf den Grundkörper aufschiebbar ist.

Bevorzugt sind die Behälterwände des schachtelförmigen Versandbehälters mehrschichtig ausgebildet und weisen eine Außenhülle aus einem Karton oder einem Kunststoff auf. Eine weitere, innerhalb der Außenhülle angeordnete Schicht des schachtelförmigen Versandbehälters kann von einer Wärmedämmschicht gebildet sein. Die Wärmedämmschicht muss hierbei nicht stofflich mit der aus Karton oder Kunststoff gebildeten Außenhülle verbunden sein, sondern die Wärmedämmschicht kann in die Außenhülle lediglich eingelegt sein. Die Wärmedämmschichten der Behälterwände können hierbei selbst einen selbsttragenden quaderförmigen Körper ausbilden, der in die aus Karton oder Kunststoff bestehende Außenhülle eingelegt ist.

Der erfindungsgemäße Versandbehälter ist insbesondere für den Post- bzw. Paketversand ausgebildet und daher von einem Frachtcontainer oder dgl. zu unterscheiden. Die erfindungsgemäße Versandbehälter hat daher bevorzugt maximale Abmessungen von 80x50x50cm, bevorzugt 60x50x50cm.

Die Erfindung wird nachfolgend anhand von in der Zeichnung schematisch dargestellten Ausführungsbeispielen näher erläutert. In dieser zeigen Fig. 1 eine Detailansicht einer Wärmeleitplatte, Fig. 2 einen Querschnitt durch eine erste Ausführungsform eines erfindungsgenmäßen Versandbehälters mit äußeren Wärmeleitplatten, Fig. 3 einen Querschnitt durch eine zweite Ausführungsform eines erfindungsgenmäßen Versandbehälters mit äußeren Wärmeleitplatten und Zwischenlagen und Fig. 4 einen Querschnitt durch eine dritte Ausführungsform eines erfindungsgemäßen Versandbehälters mit äußeren und inneren Wärmeleitplatten.

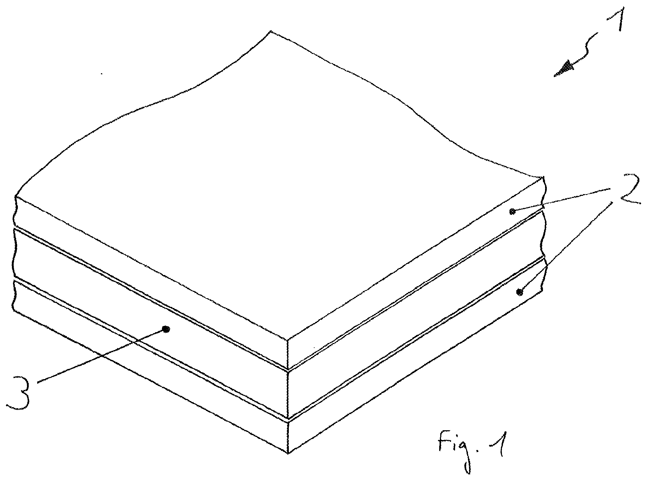

In Fig. 1 ist eine Wärmeleitplatte 1 gemäß der Erfindung schematisch dargestellt. Die Wärmeleitplatte 1 ist als Verbundplatte aus mehrere Schichten ausgebildet. Die Wärmeleitplatte 1 besteht aus zwei äußeren Schichten 2 aus Karton oder Kunststoff und einer Schicht 3 aus expandiertem Graphit. Die äußeren Schichten 2 stabilisieren den Graphitkern und haben eine Dicke von jeweils 0,3-1mm. Die innere Graphitschicht 3 hat eine Dicke von 0,4-1mm, so dass sich eine Gesamtdicke im Verbund von 1-3mm ergibt.

Die Verbindung der einzelnen Schichten bzw. Platten erfolgt durch Klebung oder eine umgebende Folie (nicht dargestellt).

Die Wärmeleitplatte 1 kann in unterschiedlichen Größen (Länge und Breite im Bereich 20-1000mm) angefertigt werden, welche an den Versandbehälter angepasst sind. Alternativ können die Wärmeleitplatten 1, auf die Größe des Versandbehälters zugeschnitten werden.

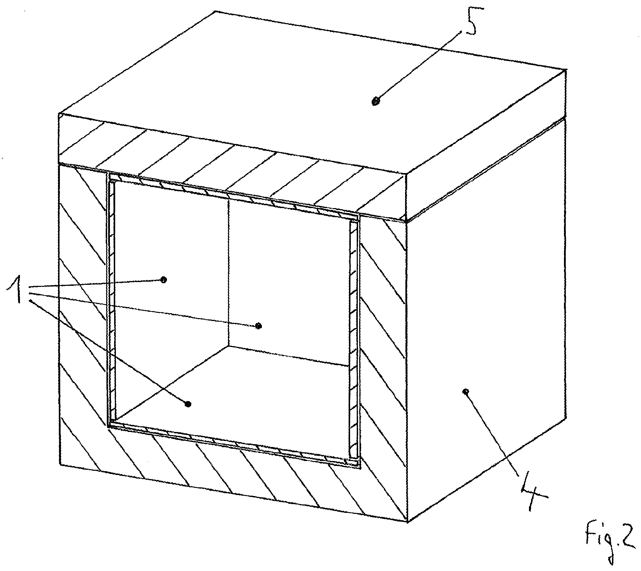

Fig. 2 zeigt eine erste Ausführungsform eines erfindungsgemäßen Versandbehälters, der als quaderförmige Versandschachtel ausgebildet ist. Die Versandschachtel umfasst sechs Schachtelwände, die von einer unteren Schale bzw. einem Grundkörper 4 und einem Deckel 5 gebildet sind, welche jeweils aus einem Isolationsmaterial (z.B. Styropor) oder einem mehrschichtigen Wandaufbau bestehen. Der Innenraum innerhalb der Schachtelwände ist mit Wärmeleitplatten 1 ausgekleidet, die gemäß Fig. 1 ausgebildet sind. Dazu wird zunächst die untere Platte 1 eingelegt. Die Platten 1 an den Seitenwänden werden konstruktiv (z.B. mit einer Verzahnung) miteinander verbunden, um ein Kippen in den Innenraum zu verhindern. Als letztes wird die Deckplatte 1 eingelegt. Die Deckplatte 1 kann alterativ am Deckel 5 z.B. durch Klebung befestigt werden.

Dies ist die einfachste Ausführungsvariante der Erfindung. Eindringende Wärme wird gleichmäßig über die äußere Innenhülle aus Graphit-Verbundplatten verteilt. Wärmebrücken in der Isolationsschicht werden ausgeglichen.

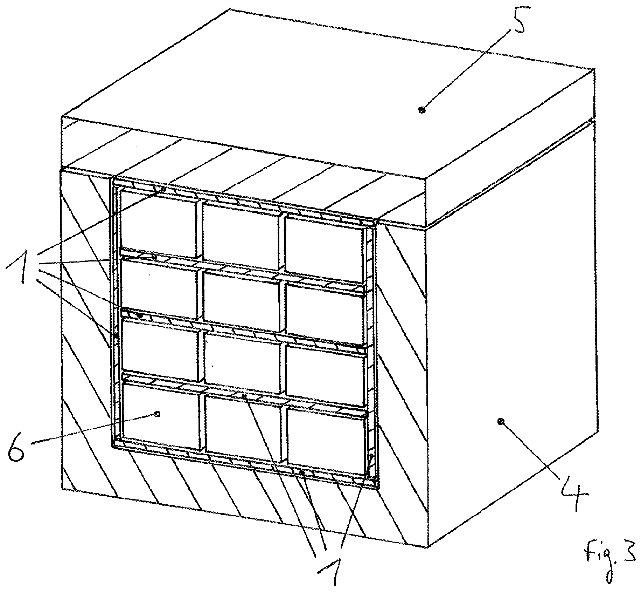

Fig. 3 zeigt eine zweite Ausführungsform eines erfindungsgemäßen Versandbehälters, der als quaderförmige Versandschachtel ausgebildet ist. Die Versandschachtel besteht wieder aus einer unteren Schale 4 und einem Deckel 5, welche jeweils aus einem Isolationsmaterial (z.B. Styropor) oder einem mehrschichtigen Wandaufbau bestehen. Der Innenraum innerhalb der Isolationsschicht ist mit Wärmeleitplatten 1 ausgekleidet, die gemäß Fig. 1 ausgebildet sind. Das Transportgut besteht aus Schachteln 6, welche jeweils mit einem Kühlmittel ausgestatten sind. Es können beispielsweise Schachteln mit integriertem Phasenwechselmaterial verwendet werden, wie sie in der WO 2020/261104 A1 - oder der WO 2020/261108 A1 beschrieben sind.

Zwischen die einzelnen Lagen des Transportguts werden Wärmeleitplatten 1 als Zwischenlagen eingelegt. Als letztes wird die Deckplatte 1 eingelegt. Die Deckplatte kann alterativ am Deckel 5 z.B. durch Klebung befestigt werden.

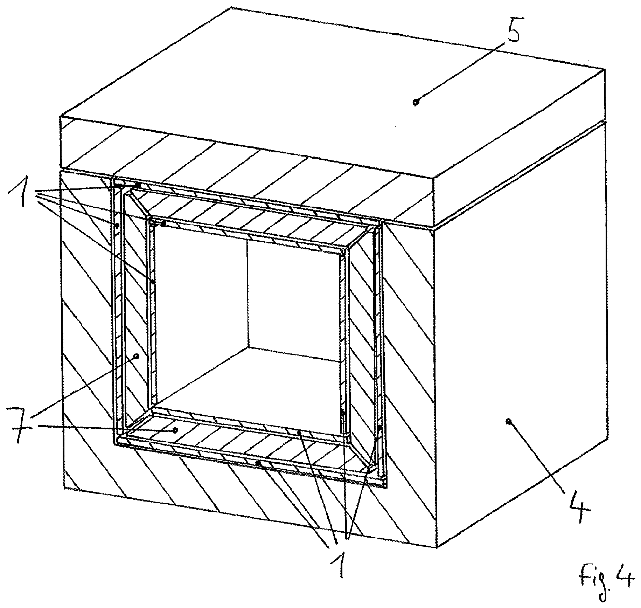

Fig. 4 zeigt eine dritte Ausführungsform eines erfindungsgemäßen Versandbehälters, der als quaderförmige Versandschachtel ausgebildet ist. Die Versandschachtel besteht aus einer unteren Schale 4 und einem Deckel 5, welche jeweils aus einem Isolationsmaterial (z.B. Styropor) oder einem mehrschichtigen Wandaufbau bestehen. Der Innenraum der Isolationsschicht wird mit Wärmeleitplatten 1 ausgekleidet, die gemäß Fig. 1 ausgebildet sind. Innerhalb der äußeren Wärmeleitplatten 1 wird eine Kühlmittelschicht 7 eingelegt, welche zum Beispiel aus Kühlakkus besteht. Darauf folgt eine innere Schicht von Wärmeleitplatten 1.

Obwohl in den Querschnittsansichten gemäß Fig. 2, 3 und 4 nur vier Seiten des Behälters gezeigt sind, versteht es sich, dass die übrigen zwei Seiten denselben Aufbau haben.

## Patentansprüche

1. Versandbehälter zum Versenden von temperaturempfindlichem Transportgut umfassend Behälterwände (4,5), welche einen für die Aufnahme des Transportguts vorgesehenen Innenraum allseitig umgeben und abschließen, wobei die Behälterwände (4,5) eine Wärmedämmung aufweisen und wobei im Innenraum und/oder den Innenraum begrenzend Wärmeleitplatten (1) angeordnet sind, die mehrschichtig aufgebaut sind und wenigstens eine Schicht (3) aus expandiertem Graphit aufweisen, **dadurch gekennzeichnet, dass** die Wärmeleitplatten (1) den Innenraum allseitig und lückenlos umgeben, dass die Wärmeleitplatten (1) wenigstens eine Trägerschicht (2) aufweisen, auf welcher die Schicht (3) aus expandiertem Graphit angeordnet ist und dass die wenigstens eine Trägerschicht (2) aus Karton oder Kunststoff besteht.

2. Versandbehälter nach Anspruch 1, **dadurch gekennzeichnet, dass** die Schicht (3) aus expandiertem Graphit zwischen zwei Trägerschichten (2) angeordnet ist.

3. Versandbehälter nach Anspruch 1 oder 2, **dadurch gekennzeichnet, dass** die wenigstens eine Trägerschicht (2) eine Dicke von 0,3-1mm aufweist.

4. Versandbehälter nach einem der Ansprüche 1 bis 3, **dadurch gekennzeichnet, dass** die wenigstens eine Schicht (3) aus expandiertem Graphit eine Dicke von 0,4-4mm, insbesondere 0,4-1mm aufweist.

5. Versandbehälter nach einem der Ansprüche 1 bis 4, **dadurch gekennzeichnet, dass** die Schicht (3) aus expandiertem Graphit in der Plattenebene eine Wärmeleitfähigkeit von 190-760 W/mK aufweist.

6. Versandbehälter nach einem der Ansprüche 1 bis 5, **dadurch gekennzeichnet, dass** die Wärmeleitplatten (1) in der Plattenebene eine Wärmeleitfähigkeit von 60-180 W/mK aufweisen.

7. Versandbehälter nach einem der Ansprüche 1 bis 6, **dadurch gekennzeichnet, dass** die Wärmeleitplatten (1) den Innenraum durchqueren.

8. Versandbehälter nach einem der Ansprüche 1 bis 7, **dadurch gekennzeichnet, dass** die Wärmeleitplatten (1) Raumteiler ausbilden, zwischen denen das Transportgut (6) angeordnet ist.

9. Versandbehälter nach einem der Ansprüche 1 bis 8, **dadurch gekennzeichnet, dass** die Wärmeleitplatten (1) passive Kühlelemente, insbesondere Kühlmittelelemente, umgeben, die im Innenraum des Versandbehälters angeordnet sind.

10. Versandbehälter nach einem der Ansprüche 1 bis 9, **dadurch gekennzeichnet, dass** eine äußere Lage aus Wärmeleitplatten (1) vorgesehen ist, welche den Innenraum allseitig umgeben, und dass eine innere Lage aus Wärmeleitplatten (1) vorgesehen ist, welche den Innenraum allseitig umgeben, wobei zwischen der äußeren und der inneren Lage passive Kühlelemente, insbesondere Kühlmittelelemente, angeordnet sind.

11. Versandbehälter nach einem der Ansprüche 1 bis 10, **dadurch gekennzeichnet, dass** die Behälterwände (4, 5) mehrschichtig ausgebildet sind und wenigstens eine Schicht aus einem Kühlmittel, wie z.B. einem Phasenwechselmaterial, als Wärmedämmung aufweisen.

12. Versandbehälter nach einem der Ansprüche 1 bis 11, **dadurch gekennzeichnet, dass** die Behälterwände (4, 5) mehrschichtig ausgebildet sind und wenigstens eine Wärmedämmschicht als Wärmedämmung aufweisen.

13. Versandbehälter nach einem der Ansprüche 1 bis 12, **dadurch gekennzeichnet, dass** die Behälterwände (4, 5) mehrschichtig ausgebildet sind und eine Außenhülle aus einem Karton oder einem Kunststoff aufweisen.

14. Wärmeleitplatte zur Verwendung in einem Versandbehälter nach einem der Ansprüche 1 bis 13, umfassend wenigstens eine Schicht (3) aus expandiertem Graphit und zwei Trägerschichten (2), zwischen denen die Schicht (3) aus expandiertem Graphit angeordnet ist, **dadurch gekennzeichnet, dass** die Trägerschichten (2) aus Karton oder Kunststoff bestehen.

15. Wärmeleitplatte nach Anspruch 14, **dadurch gekennzeichnet, dass** die Trägerschichten (2) eine Dicke von 0,3-1mm aufweisen.

16. Wärmeleitplatte nach Anspruch 14 oder 15, **dadurch gekennzeichnet, dass** die wenigstens eine Schicht (3) aus expandiertem Graphit eine Dicke von 0,4-4mm, insbesondere 0,4-1mm aufweist.

## Claims

1. Shipping container for shipping temperature-sensitive goods to be transported, comprising container walls (4, 5), which surround and close off on all sides an interior space provided for receiving the goods to be transported, whereby the container walls (4, 5) have thermal insulation and whereby heat conducting plates (1) are arranged in the interior space and/or delimiting the interior space, which heat conducting plates have a multilayer structure and comprise at least one layer (3) of expanded graphite, **characterized in that** the heat conducting plates (1) surround the interior space on all sides and without gaps, that the heat conducting plates (1) have at least one carrier layer (2) on which the layer (3) of expanded graphite is arranged and that the at least one carrier layer (2) consists of cardboard or plastic.

2. Shipping container according to claim 1, **characterized in that** the layer (3) of expanded graphite is arranged between two carrier layers (3).

3. Shipping container according to claim 1 or 2, **characterized in that** the at least one carrier layer (2) has a thickness of 0.3-1 mm.

4. Shipping container according to any one of claims 1 to 3, **characterized in that** the at least one layer (3) of expanded graphite has a thickness of 0.4-4 mm, in particular 0.4-1 mm.

5. Shipping container according to any one of claims 1 to 4, **characterized in that** the layer (3) of expanded graphite has a thermal conductivity of 190-760 W/mK in the plate plane.

6. Shipping container according to any one of claims 1 to 5, **characterized in that** the heat conducting plates (1) have a thermal conductivity of 60-180 W/mK in the plate plane.

7. Shipping container according to any one of claims 1 to 6, **characterized in that** the heat conducting plates (1) traverse the interior space.

8. Shipping container according to any one of claims 1 to 7, **characterized in that** the heat conducting plates (1) form space dividers between which the transported goods (6) are arranged.

9. Shipping container according to any one of claims 1 to 8, **characterized in that** the heat conducting plates (1) surround passive cooling elements, in particular coolant elements, which are arranged in the interior space of the shipping container.

10. Shipping container according to any one of claims 1 to 9, **characterized in that** an outer layer of heat conducting plates (1) is provided, which surround the interior space on all sides, and **in that** an inner layer of heat conducting plates (1) is provided, which surround the interior space on all sides, passive cooling elements, in particular coolant elements, being arranged between the outer and the inner layer.

11. Shipping container according to any one of claims 1 to 10, **characterized in that** the container walls (4, 5) are multilayered and have at least one layer of a coolant, such as a phase change material, as thermal insulation.

12. Shipping container according to any one of claims 1 to 11, **characterized in that** the container walls (4, 5) are multi-layered and have at least one thermal insulation layer as thermal insulation.

13. Shipping container according to any one of claims 1 to 12, **characterized in that** the container walls (4, 5) are multi-layered and have an outer shell made of a cardboard or a plastic.

14. A heat conducting plate for use in a shipping container according to any one of claims 1 to 13, comprising at least one layer (3) of expanded graphite and two carrier layers (2) between which the layer (3) of expanded graphite is disposed, **characterized in that** the carrier layers (2) consist of cardboard or plastic.

15. Heat conducting plate according to claim 14, **characterized in that** the carrier layers (2) have a thickness of 0.3-1 mm.

16. Heat conducting plate according to claim 14 or 15, **characterized in that** the at least one layer (3) of expanded graphite has a thickness of 0.4-4 mm, in particular 0.4-1 mm.

## Revendications

1. Conteneur d'expédition pour l'envoi de marchandises à transportées sensibles à la température comprenant des parois de conteneur (4, 5) qui entourent et ferment de tous côtés un espace intérieur prévu pour recevoir les marchandises à transportées, dans lequel les parois du conteneur (4, 5) présentent une isolation thermique et dans lequel des plaques conductrices de chaleur (1) sont disposées dans l'espace intérieur et/ou délimitant l'espace intérieur, lesquelles sont constituées de plusieurs couches et présentent au moins une couche (3) de graphite expansé, **caractérisé en ce que** les plaques conductrices de chaleur (1) entourent l'espace intérieur de tous côtés et sans lacunes, **en ce que** les plaques conductrices de chaleur (1) présentent au moins une couche de support (2) sur laquelle est disposée la couche (3) de graphite expansé et **en ce que** la au moins une couche de support (2) est constituée de carton ou de plastique.

2. Conteneur d'expédition selon la revendication 1, **caractérisé en ce que** la couche (3) de graphite expansé est disposée entre deux couches de support (2).

3. Conteneur d'expédition selon la revendication 1 ou 2, **caractérisé en ce que** la au moins une couche de support (2) présente une épaisseur de 0,3-1 mm.

4. Conteneur d'expédition selon l'une des revendications 1 à 3, **caractérisé en ce que** la au moins une couche (3) de graphite expansé présente une épaisseur de 0,4-4 mm, en particulier 0,4-1 mm.

5. Conteneur d'expédition selon l'une des revendications 1 à 4, **caractérisé en ce que** la couche (3) de graphite expansé présente une conductivité thermique de 190-760 W/mK dans le plan de la plaque.

6. Conteneur d'expédition selon l'une des revendications 1 à 5, **caractérisé en ce que** les plaques conductrices de chaleur (1) présentent une conductivité thermique de 60-180 W/mK dans le plan de la plaque.

7. Conteneur d'expédition selon l'une des revendications 1 à 6, **caractérisé en ce que** les plaques conductrices de chaleur (1) traversent l'espace intérieur.

8. Conteneur d'expédition selon l'une des revendications 1 à 7, **caractérisé en ce que** les plaques conductrices de chaleur (1) forment des séparateurs d'espace entre lesquels sont disposées les marchandises à transportées (6).

9. Conteneur d'expédition selon l'une des revendications 1 à 8, **caractérisé en ce que** les plaques conductrices de chaleur (1) entourent des éléments de refroidissement passifs, en particulier des éléments réfrigérants, qui sont disposés dans l'espace intérieur du conteneur d'expédition.

10. Conteneur d'expédition selon l'une des revendications 1 à 9, **caractérisé en ce qu'**une couche externe de plaques conductrices de chaleur (1) est prévue, qui entoure l'espace intérieur de tous côtés, et **en ce qu'**une couche interne de plaques conductrices de chaleur (1) est prévue, qui entoure l'espace intérieur de tous côtés, dans lequel des éléments de refroidissement passifs, en particulier des éléments réfrigérants, sont disposés entre la couche externe et la couche interne.

11. Conteneur d'expédition selon l'une des revendications 1 à 10, **caractérisé en ce que** les parois du conteneur (4, 5) sont constituées de plusieurs couches et présentent au moins une couche d'un agent réfrigérant, comme par exemple un matériau à changement de phase, comme isolation thermique.

12. Conteneur d'expédition selon l'une des revendications 1 à 11, **caractérisé en ce que** les parois du conteneur (4, 5) sont constituées de plusieurs couches et présentent au moins une couche d'isolation thermique comme isolation thermique.

13. Conteneur d'expédition selon l'une des revendications 1 à 12, **caractérisé en ce que** les parois du conteneur (4, 5) sont constituées de plusieurs couches et présentent une enveloppe extérieure en carton ou en plastique.

14. Plaque conductrice de chaleur destinée à être utilisée dans un conteneur d'expédition selon l'une des revendications 1 à 13, comprenant au moins une couche (3) de graphite expansé et deux couches de support (2), entre lesquelles est disposée la couche (3) de graphite expansé, **caractérisée en ce que** les couches de support (2) sont constituées de carton ou de plastique.

15. Plaque conductrice de chaleur selon la revendication 14, **caractérisée en ce que** les couches de support (2) présentent une épaisseur de 0,3-1 mm.

16. Plaque conductrice de chaleur selon la revendication 14 ou 15, **caractérisée en ce que** la au moins une couche (3) de graphite expansé présente une épaisseur de 0,4-4 mm, en particulier 0,4-1 mm.
